# EUROPÄISCHE PATENTANMELDUNG

(11) **EP 3 232 105 A1**
(43) Veröffentlichungstag der Anmeldung: **18.10.2017**
(21) Anmeldenummer: 16164806.8
(22) Anmeldetag: 12.04.2016
(51) Int. Cl.: F16L 5/04, A62C 2/06, E04G 15/06, H02G 3/04

(54) **VERFAHREN ZUM HERSTELLEN EINER BAUGRUPPE FÜR EINE LEITUNGSDURCHFÜHRUNG, BAUGRUPPE SOWIE VERFAHREN ZUR HERSTELLUNG EINER LEITUNGSDURCHFÜHRUNG**

(71) Anmelder: HILTI Aktiengesellschaft, 9494 Schaan (LI)
(72) Erfinder: Monden, Thomas, 87778 Stetten (DE); Mordau, Ulf, 86875 Waal (DE); Paetow, Mario, 86859 Igling (DE)
(74) Vertreter: Hilti Aktiengesellschaft Corporate Intellectual Property

(57) **Zusammenfassung**

Ein Verfahren zum Herstellen einer Baugruppe (10) für eine Leitungsdurchführung ist beschrieben, wobei eine ein Brandschutzmodul (38) bildende Brandschutzmatte (12) der Größe der Leitungsdurchführung entsprechend abgelängt wird. Die Brandschutzmatte (12) weist ein flexibles Trägerelement (24) auf, an dessen einem Endbereich (28) ein Brandschutzband (26) aus einem intumeszierenden Material befestigt ist. Die Brandschutzmatte (12) wird rundgeformt, und die sich gegenüberliegenden Ränder (32, 34) der Brandschutzmatte (12) werden über ein Verbindungsmittel miteinander verbunden, sodass das Brandschutzband (26) in einem Bereich eines axialen Endes (40) der rundgeformten Brandschutzmatte (12) ist. Wenigstens ein separat von der Brandschutzmatte (12) ausgebildetes mechanisches Positionierungselement (14) wird an der Brandschutzmatte (12) befestigt, das derart eingerichtet ist, dass die Baugruppe (10) über das mechanische Positionierungselement (14) an einer Wand oder einer Schalung befestigbar ist. Ferner sind eine Baugruppe (10) sowie ein Verfahren zur Herstellung einer Leitungsdurchführung beschrieben.

## Beschreibung

Die Erfindung betrifft ein Verfahren zum Herstellen einer Baugruppe für eine Leitungsdurchführung, eine Baugruppe für eine Leitungsdurchführung zum Eingießen in einem Bauteil sowie ein Verfahren zur Herstellung einer Leitungsdurchführung mit einer Baugruppe in einem Bauteil.

Aus dem Stand der Technik sind Baugruppen zum Brandschutz bekannt, die in einem Bauteil eingegossen werden, um dabei eine Leitungsdurchführung in einer Seitenwand oder einer Decke herzustellen. Generell werden solche Baugruppen als Cast-In-Produkte bezeichnet.

Üblicherweise sind die Baugruppen vorkonfektioniert, das heißt, sie weisen eine vordefinierte Form auf, insbesondere Länge oder Durchmesser.

Der Nachteil dieser vorkonfektionierten Bauteile ist es, dass die Flexibilität stark eingeschränkt ist, wodurch der Anwender der Brandschutzprodukte bei der Planung der Rohr- und Kabelsysteme bereits die verfügbaren, vorkonfektionierten Baugruppen berücksichtigen muss. Änderungen während der Bau- bzw. Ausführungsphase können bei den vorkonfektionierten Baugruppen nicht mehr berücksichtigt werden, sodass das Brandschutzprodukt manuell abgelängt werden müsste, was jedoch zu einer Beschädigung des schützenden Materials führen kann.

Um diesen Nachteil zu beseitigen sind ferner Baugruppen bekannt, die eine Standardgröße aufweisen und abgelängt oder mit anderen Anbauteilen verlängert werden können. Dadurch ist zumindest eine gewisse Flexibilität am Einsatzort gegeben. Sofern es in der Bau- bzw. Ausführungsphase zu Änderungen kommt, können diese zumindest in einem gewissen Rahmen vorgenommen werden.

In Extremsituationen kann es jedoch weiterhin vorkommen, dass die Bauphase unterbrochen werden muss, bis neue vorkonfektionierte Bauteile mit der entsprechenden Größe bestellt und geliefert worden sind. Dies verzögert die Bauphase und somit das gesamte Bauvorhaben, was höhere Kosten zur Folge hat.

Darüber hinaus sind aus dem Stand der Technik sogenannte Rohrmanschetten bekannt, wie sie in der DE 101 38 726 A1 beschrieben sind, die um ein bestehendes Rohr gelegt werden. Diese Rohrmanschetten eignen sich jedoch nicht zum Eingießen in einem Bauteil, also als sogenanntes Cast-In-Produkt.

Die Aufgabe der Erfindung besteht daher darin, eine flexible Baugruppe für eine Leitungsdurchführung bereitzustellen, mit der eine Leitungsdurchführung in einfacher Weise hergestellt werden kann.

Die Aufgabe wird erfindungsgemäß durch ein Verfahren zum Herstellen einer Baugruppe für eine Leitungsdurchführung gelöst, bei der eine ein Brandschutzmodul bildende Brandschutzmatte der Größe der Leitungsdurchführung entsprechend abgelängt wird, wobei die Brandschutzmatte ein flexibles Trägerelement aufweist, an dessen einem Endbereich ein, insbesondere kontinuierliches, Brandschutzband aus einem intumeszierenden Material befestigt ist.
Die Brandschutzmatte wird rundgeformt und die sich gegenüberliegenden Ränder der Brandschutzmatte werden über ein Verbindungsmittel miteinander verbunden, sodass das Brandschutzband in einem Bereich eines axialen Endes der rundgeformten Brandschutzmatte ist. Zudem wird wenigstens ein separat von der Brandschutzmatte ausgebildetes mechanisches Positionierungselement an der Brandschutzmatte befestigt, das derart eingerichtet ist, dass die Baugruppe über das mechanische Positionierungselement an einer Wand oder einer Schalung befestigbar ist.

Ferner löst eine Baugruppe für eine Leitungsdurchführung zum Eingießen in einem Bauteil die obige Aufgabe, wobei die Baugruppe wenigstens ein mechanisches Positionierungselement aufweist, das derart eingerichtet ist, dass die Baugruppe über das wenigstens eine mechanische Positionierungselement an einer Wand oder einer Schalung befestigbar ist. Die Baugruppe weist zudem ein im Wesentlichen zylinderförmiges Brandschutzmodul auf, das ein flexibles Trägerelement umfasst, an dem ein, insbesondere kontinuierliches, Brandschutzband aus einem intumeszierenden Material befestigt ist. Das Brandschutzmodul weist zwei sich gegenüberliegende Ränder auf, die sich in Umfangsrichtung des Brandschutzmoduls gegenüberliegen und über ein Verbindungsmittel miteinander verbunden sind.

Der Grundgedanke der Erfindung besteht darin, eine flexible Baugruppe bereitzustellen, die hinsichtlich ihrer Größe der Leitungsdurchführung den Anforderungen vor Ort hergestellt werden kann, also insbesondere die Länge und/oder der Durchmesser der Figur. Eine Vorauswahl der benötigten Brandschutzprodukte muss demnach bei der Planungsphase zumindest hinsichtlich der Größe der Baugruppen nicht mehr vorgenommen werden, was die Planung erleichtert. Die Brandschutzmatte, die das Brandschutzmodul bildet, wird entsprechend erst vor Ort auf die entsprechende Länge bzw. Größe abgelängt und zu dem Brandschutzmodul geformt. Das Trägerelement der Brandschutzmatte bildet dabei die Hülse für die Baugruppe aus, sodass die Baugruppe eine gewisse Steifigkeit hat, die sicherstellt, dass die Baugruppe ihre Form beim Eingießen in einem Bauteil aufrecht hält.

Unter einem kontinuierlichen Brandschutzband ist ein Brandschutzband zu verstehen, das durchgehend ausgebildet ist, also keine Unterbrechungen aufweist. Das kontinuierliche Brandschutzband ist demnach nicht aus vielen einzelnen Elementen gebildet, die voneinander beabstandet sind. Alternativ, d.h. bei einem diskontinuierlichen Brandschutzband, kann das Brandschutzband beispielsweise aus einzelnen Streifen bzw. Segmenten oder Elementen bestehen, welche aneinanderstoßen oder voneinander beabstandet sein können. Dabei sind insbesondere die Streifen so angeordnet, dass nach dem Verbinden der zwei sich gegenüberliegenden Ränder des Brandschutzbandes die Streifen, wodurch eine Leitungsdurchführung geschaffen wird, im Wesentlichen axial zur Leitungsdurchführung angeordnet sind. Hierdurch wird die Ausbildung der Leitungsdurchführung vereinfacht.

Bei den mechanischen Positionierungsmittel handelt es sich vorzugsweise um eigensteife, also mechanisch stabile Positionierungsmittel. Die Positionierungsmittel stellen eine mechanische Befestigung der Baugruppe an der Wand oder der Schalung sicher, sodass die Baugruppe mechanisch an der Schalung oder der Wand dauerhaft befestigt werden kann, wenn die Leitungsdurchführung hergestellt wird. Hierzu können die Positionierungsmittel Öffnungen aufweisen, durch die Befestigungsmittel wie Schrauben, Nägel oder ähnliches geführt werden können.

Ein Aspekt sieht vor, dass die Brandschutzmatte auf einer Rolle aufgerollt ist, von der sie zunächst abgerollt wird. Hierdurch lässt sich die Brandschutzmatte in kompakter Weise transportieren, sodass für mehrere Baugruppen benötigtes Material stets vor Ort vorhanden ist. Das Aufrollen der Brandschutzmatte ist möglich, da das Trägerelement trotz seiner stabilisierenden Wirkung flexibel ist.

Insbesondere werden die sich gegenüberliegenden Ränder des Brandschutzmoduls, also der rundgeformten Brandschutzmatte, über wenigstens ein separates Verbindungsmittel miteinander verbunden. Hierdurch ist in einfacher Weise sichergestellt, dass die rundgeformte Brandschutzmatte ihre Form beibehält. Das separate Verbindungsmittel kann ein separater Klebestreifen, ein Klettverschluss, ein Kabelbinder, eine Schlauchschelle oder Ähnliches sein.

Der wenigstens eine Klebestreifen ist insbesondere an der zum Brandschutzband entgegengesetzten Seite des Trägerelements befestigt. Hierdurch ist sichergestellt, dass das intumeszierende Material des Brandschutzbands den Klebestreifen nicht lösen wird, wenn sich das intumeszierende Material ausdehnt.

Gemäß einem weiteren Aspekt wird das wenigstens eine Positionierungselement an das Brandschutzmodul geklebt, gesteckt, geklipst oder an ihm eingehakt, insbesondere an der zum Brandschutzband entgegengesetzten Seite des Trägerelements, also üblicherweise an der Außenseite. Das wenigstens eine Positionierungselement lässt sich so in einfacher Weise am Brandschutzmodul anbringen.

Vorzugsweise ist am Brandschutzband ein Streifenelement zur Rauchgas- und Wasserabdichtung befestigt, das insbesondere aus einem Schaumstoffmaterial besteht. Die entsprechend hergestellte Baugruppe verhindert somit wirkungsvoll, dass Rauch bzw. Wasser über die Leitungsdurchführung in einen benachbarten Raum gelangt, der durch die Wand von einem anderen Raum abgetrennt ist, in der die Baugruppe die Leitungsdurchführung ausbildet.

Das Brandschutzmodul ist insbesondere derart geformt, dass die sich gegenüberliegenden Ränder des Brandschutzmoduls aneinander anliegen. Demnach liegen keine überlappenden Bereiche vor, wenn die das Brandschutzmodul bildende Brandschutzmatte rundgeformt worden ist. Die beiden Ränder der abgelängten Brandschutzmatte liegen direkt aneinander an.

Ein Aspekt sieht vor, dass das wenigstens eine Positionierungselement an der zum Brandschutzband entgegengesetzten Seite des Trägerelements befestigt ist. Hierdurch ist sichergestellt, dass auf der Innenseite der Baugruppe lediglich das Brandschutzband und optional das Streifenelement zur Rauchgas- und Wasserabdichtung angeordnet ist, wodurch deren Funktionen nicht durch andere Bauteile wie dem wenigstens einen Positionierungselement beeinträchtigt werden.

Das flexible Trägerelement ist insbesondere eine Folie, die vorzugsweise aus einem Kunststoff oder einem Metall besteht. Hierdurch wird eine ausreichende Stabilität der Baugruppe erreicht, sofern die Brandschutzmatte rundgeformt bzw. zum Brandschutzmodul geformt ist. Die benötigte Flexibilität, die gewährleistet, dass die Brandschutzmatte auf einer Rolle aufgerollt werden kann, lässt sich in einfacher Weise über die Dicke des Trägerelements einstellen.

Des Weiteren betrifft die Erfindung ein Verfahren zur Herstellung einer Leitungsdurchführung mit einer Baugruppe der zuvor genannten Art in einem Bauteil, insbesondere einer Wand oder einer Decke aus Beton, wobei die Baugruppe über das wenigstens eine Positionierungselement an der Wand oder der Schalung befestigt wird und das Brandschutzmodul beim Gießen des Bauteils von dem das Bauteil bildenden Gussmaterial umschlossen wird, insbesondere vom Beton. Die Baugruppe für eine Leitungsdurchführung wird dementsprechend beim Eingießen des Bauteils in diesem integriert, wobei die korrekte Positionierung der Baugruppe über das entsprechende mechanische Positionierungselement vorab sichergestellt ist. Bei der Baugruppe handelt es sich demnach um ein sogenanntes Cast-In-Brandschutzprodukt.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1: eine Übersicht der zur Herstellung der erfindungsgemäßen Baugruppe verwendeten Komponenten,
- Figur 2: eine Schnittdarstellung der verwendeten Brandschutzmatte,
- Figur 3: eine perspektivische Ansicht der erfindungsgemäßen Baugruppe gemäß einer ersten Ausführungsform,
- Figur 4: eine transparente Darstellung der Baugruppe aus Figur 2,
- Figur 5: eine perspektivische Darstellung der erfindungsgemäßen Baugruppe gemäß einer zweiten Ausführungsform,
- Figur 6: eine weitere perspektivische Darstellung der erfindungsgemäßen Baugruppe gemäß Figur 5,
- Figur 7: eine weitere perspektivische Darstellung der erfindungsgemäßen Baugruppe gemäß der Figuren 5 und 6, und
- Figur 8: eine Seitenansicht der erfindungsgemäßen Baugruppe gemäß der Figuren 5 bis 7.

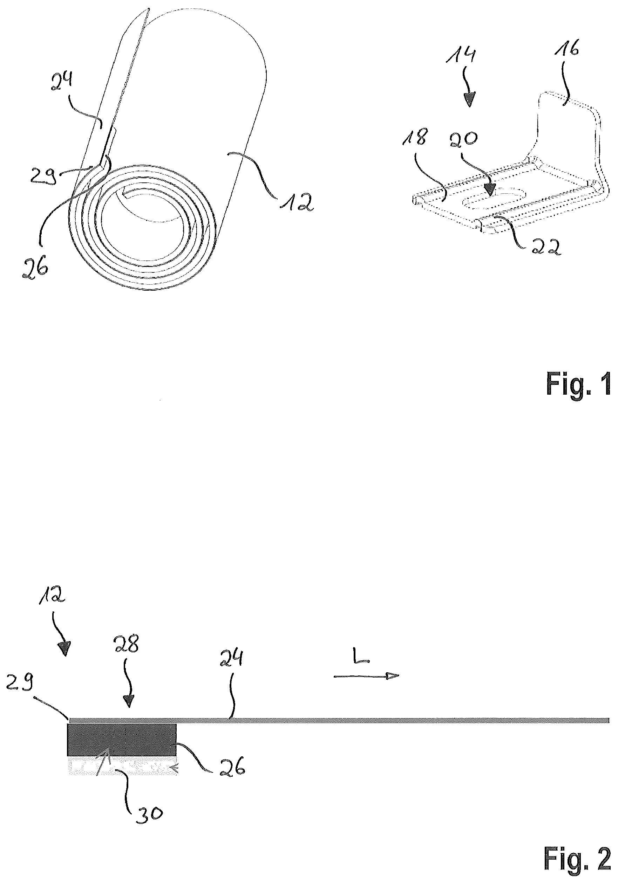

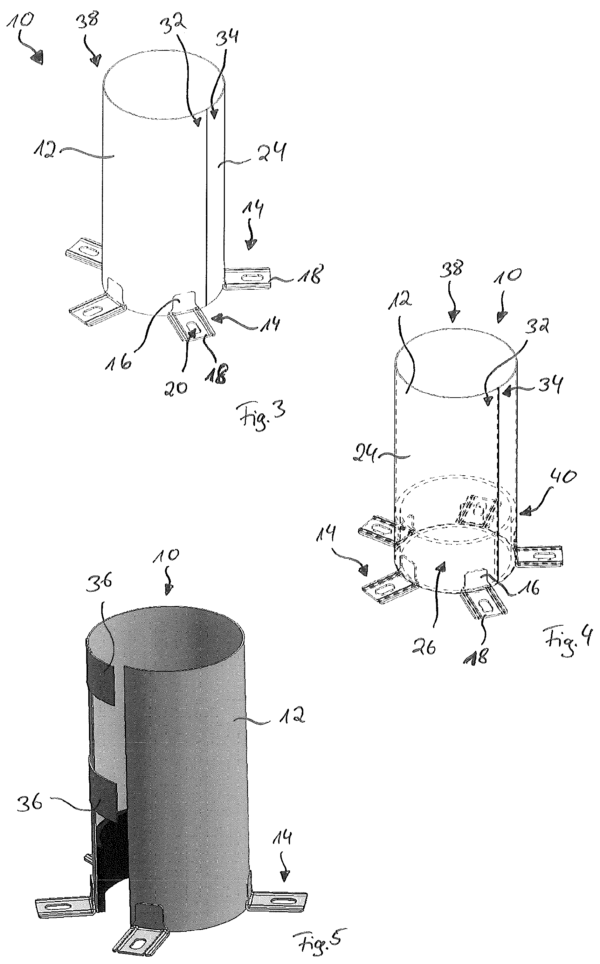

In Figur 1 sind die Komponenten dargestellt, die für die Herstellung einer Baugruppe 10 für eine Leitungsdurchführung durch eine Seitenwand oder Decke in einem Gebäude benötigt werden, welche im hergestellten Zustand in Figur 3 gemäß einer ersten Ausführungsform dargestellt ist.

Bei den Komponenten handelt es sich um eine Brandschutzmatte 12, die in der gezeigten Ausführungsform auf einer Rolle aufgerollt ist und zur Baustelle geliefert wird. Der Aufbau der Brandschutzmatte 12 wird mit Bezug auf Figur 2 später erläutert.

Eine weitere Komponente der Baugruppe 10 ist ein von der Brandschutzmatte 12 separat ausgebildetes, mechanisches Positionierungselement 14, welches in der gezeigten Ausführungsform als Haken oder Winkelelement ausgebildet ist.

Das mechanische Positionierungselement 14 ist ein mechanisch stabiles Element, das aus einem Kunststoff oder einem Metall gebildet ist und demnach eine entsprechende Eigensteifigkeit aufweist.

Wie aus der Figur 1 ersichtlich ist, weist das Positionierungselement 14 einen Verbindungsbereich 16 auf, über den das Positionierungselement an der Brandschutzmatte 12 befestigt werden kann, wie nachher noch beschrieben wird. Des Weiteren hat das Positionierungselement 14 einen Positionierungsabschnitt 18, über den das Positionierungselement 14 an einer Wand oder der Schalung befestigt werden kann. Hierzu ist im Positionierungsabschnitt 18 eine Öffnung 20 vorgesehen, durch die ein Befestigungsmittel wie eine Schraube oder ein Nagel geführt werden kann.

Der Verbindungsbereich 16 und der Positionierungsabschnitt 18 sind vorzugsweise einstückig miteinander ausgebildet und/oder in einem rechten Winkel zueinander angeordnet.

Des Weiteren kann der Positionierungsabschnitt 18 eine Verstärkungsstruktur aufweisen, die durch Prägungen 22, Rippen und/oder Vertiefungen gebildet ist.

Mit diesen beiden Komponenten, also der Brandschutzmatte 12 und dem Positionierungselement 14, kann die in Figur 3 dargestellte Baugruppe 10 hergestellt werden, wie nachfolgend noch erläutert wird.

Aus der Figur 2 geht der Aufbau der Brandschutzmatte 12 hervor, da die Brandschutzmatte 12 dort in einer geschnittenen Darstellung gezeigt ist.

Die Brandschutzmatte 12 weist ein flexibles Trägerelement 24 auf, welches in der gezeigten Ausführungsform aus einer Folie besteht. Die Folie des Trägerelements 24 ist eine Kunststofffolie oder eine Metallfolie.

Auf der Innenseite des Trägerelements 24 ist ein Brandschutzband 26 vorgesehen, welches mit dem Trägerelement 24 verbunden ist. Das Brandschutzband 26 ist an einem Endbereich 28 des Trägerelements 24, genauer an einem Rand 29 des Trägerelements 24 angeordnet und erstreckt sich quer zu diesem Rand 29 lediglich über einen gewissen Teilbereich des Trägerelements 24, beispielsweise über maximal 20 % der Länge L des Trägerelements 24. Das Brandschutzband 26 verläuft aber über die gesamte Breite (senkrecht zur Zeichenebene) des Trägerelements 24.

Es geht auch bereits aus der perspektivischen Darstellung der aufgerollten Brandschutzmatte 12 in Figur 1 hervor, dass das Brandschutzband 26 lediglich in einem Endbereich 28, d. h. am Rand 29 des Trägerelements 24 angeordnet ist.

Am Brandschutzband 26 ist zudem ein Streifenelement 30 zur Rauchgas- und Wasserabdichtung befestigt, welches das Brandschutzband 26 zur Innenseite hin kaschiert. Das Streifenelement 30 kann aus einem Schaumstoffmaterial ausgebildet sein, welches besonders gut geeignet ist, Rauchgas bzw. Wasser abzudichten.

Die Brandschutzmatte 12 entspricht somit den Anforderungen zur Brandschutzzulassung hinsichtlich ETA und UL. Zudem ist eine Rauchgasdichtigkeit gegeben.

Das Brandschutzband 26 ist dagegen aus einem intumeszierenden Material hergestellt und vorzugsweise kontinuierlich bzw. durchgehend am Rand 29 des Trägerelements 24 ausgebildet.

Mit den in den Figuren 1 und 2 gezeigten und zuvor näher beschriebenen Komponenten wird die in Figur 3 gezeigte Baugruppe 10 wie nachfolgend erläutert hergestellt.

Die Brandschutzmatte 12 wird zunächst von der Rolle abgerollt und dann der Größe der herzustellenden Leitungsdurchführung entsprechend abgelängt.

Anschließend wird die Brandschutzmatte 12 rundgeformt, sodass eine im Wesentlichen zylindrisch geformte Brandschutzmatte 12 gebildet ist und sich die beiden Ränder 32, 34 der abgelängten Brandschutzmatte 12 gegenüberliegen.

Hierbei stoßen die Ränder 32, 34 der Brandschutzmatte 12 aneinander an. Im rundgeformten Zustand der Brandschutzmatte 12 werden die beiden sich gegenüberliegenden Ränder 32, 34 über ein Verbindungsmittel miteinander verbunden.

Die sich gegenüberliegenden Ränder 32, 34 können über einen Kleber miteinander verbunden werden. Alternativ können die aneinander anliegenden Ränder 32, 34 miteinander verschweißt werden. Eine derartige Verbindung ist in der Ausführungsform der Figur 3 gezeigt.

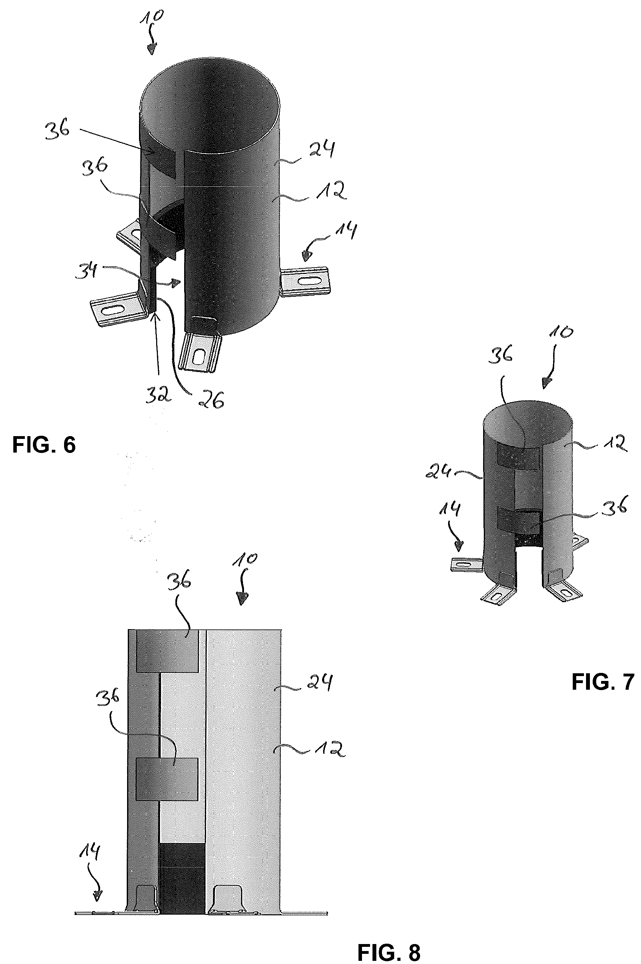

Bei dem Verbindungsmittel kann es sich auch um wenigstens einen separaten oder mehrere separate Klebestreifen 36 handeln, wie aus der in den Figuren 5 bis 8 dargestellten zweiten Ausführungsform hervorgeht.

Nachdem die Brandschutzmatte 12 rundgeformt und die sich gegenüberliegenden Ränder 32, 34 der Brandschutzmatte 12 miteinander verbunden worden sind, ist ein Brandschutzmodul 38 geschaffen.

Das flexible Trägerelement 24 bildet dann eine Hülse aus, die zur Stabilisierung der gesamten Baugruppe 10 dient. Die Außenseite des flexiblen Trägerelements 24 bildet entsprechend die Außenseite der Baugruppe 10, wohingegen der von ihr umgegebene Raum als Leitungsdurchführung dienen wird, wenn die Baugruppe 10 eingegossen wird.

Nachdem das Brandschutzmodul 38 hergestellt worden ist, also die Brandschutzmatte 12 rundgeformt und die Ränder 32, 34 miteinander verbunden worden sind, wird das wenigstens eine separat von der Brandschutzmatte 12 ausgebildete mechanische Positionierungselement 14 an der rundgeformten Brandschutzmatte 12 bzw. am Brandschutzmodul 38 befestigt.

Alternativ kann das wenigstens eine mechanische Positionierungselement 14 auch erst an die abgelängte Brandschutzmatte 12 angebracht werden, die anschließend rundgeformt wird, um das Brandschutzmodul 38 auszubilden.

In der gezeigten Ausführungsform sind mehrere Positionierungselemente 14 über den Umfang des rundgeformten Brandschutzmoduls 38 an diesem befestigt. Hierdurch lässt sich die Baugruppe 10 besser an einer Wand bzw. einer Schalung befestigen.

Die Positionierungselemente 14 können auf das Brandschutzmodul 38 aufgeklebt, eingesteckt, eingeklipst oder an ihm eingehakt werden. Je nachdem, wie die Positionierungselemente 14 am Brandschutzmodul 38 befestigt werden, weist die Brandschutzmatte 12 entsprechende Aufnahmeelemente für die Positionierungselemente 14 auf.

Die Positionierungselemente 14 werden an die Außenseite des Brandschutzmoduls 38 befestigt, insbesondere des Trägerelements 24, also an der zum Brandschutzband 26 entgegengesetzten Seite des Trägerelements 24.

Das Brandschutzband 26 sowie das Streifenelement 30 sind der Innenseite des Brandschutzmoduls 38 zugeordnet, wohingegen die Positionierungselemente 14 an der entgegengesetzten Außenseite des Brandschutzmoduls 38 bzw. des Trägerelements 24 angeordnet sind.

Es geht insbesondere aus der Figur 4 hervor, in der die hergestellte Baugruppe 10 in einer transparenten Darstellung gezeigt ist, dass das Brandschutzband 26 sowie das daran angeordnete Streifenelement 30 lediglich an einem axialen Ende 40 der Baugruppe 10 angeordnet ist, in dem die Positionierungselemente 14 ebenfalls angeordnet sind.

Dies bedeutet, dass das intumeszierende Material des Brandschutzbandes 26 in dem Bereich angeordnet ist, über den die Baugruppe 10 an einer Wand oder einer Schalung befestigt wird. Die Herstellungskosten der Baugruppe 10, insbesondere der Brandschutzmatte 12, können entsprechend reduziert werden, da das verhältnismäßig teure intumeszierende Material lediglich dort verwendet wird, wo eine Schnittstelle zwischen einem Raum und der Wand ist.

Da die Brandschutzmatte 12 vor Ort abgelängt wird und die Positionierungselemente 14 vor Ort an die Brandschutzmatte 12 angebracht werden, kann die Baugruppe vor Ort in flexibler Weise hergestellt werden. Es bedarf hierzu keiner größerer Planung und das Risiko ist minimiert, dass es zu Verzögerung während der Bauphase kommt.

Nachdem die Baugruppe 10 wie zuvor beschrieben hergestellt worden ist, wird die Baugruppe 10 verwendet, um eine Leitungsdurchführung herzustellen.

Hierzu wird die Baugruppe 10 über die Positionierungselemente 14 an einer bereits bestehenden Wand oder der Schalung einer zukünftigen Wand befestigt.

Bei der Wand kann es sich generell um eine Seitenwand oder eine Decke handeln.

Nachdem die Baugruppe 10 über die Positionierungselemente 14 in einer Öffnung an der bereits bestehenden Wand oder der Schalung einer zukünftigen Wand befestigt sind, wird das Brandschutzmodul 38 beim Zugießen der Öffnung außen an der Baugruppe oder beim Gießen des Bauteils, also der Wand, von dem das Bauteil bildenden Gussmaterial außenseitig umschlossen, insbesondere von Beton im Fall einer Betonwand.

Das dichte Brandschutzmodul 38 verhindert, dass flüssiger Beton in den von ihm umschlossenen Hohlraum gelangt, der als Leitungsdurchführung dient und in den das Brandschutzband 26 sowie das Streifenelement 30 ragen.

In den Figuren 5 bis 8 ist eine zweite Ausführungsform der Baugruppe 10 gezeigt, die sich dahingehend von der ersten Ausführungsform unterscheidet, dass die beiden Ränder 32, 34 der abgelängten Brandschutzmatte 12 über separate Klebestreifen 36 miteinander verbunden werden. Sobald die Ränder 32, 34 miteinander verbunden sind, bilden sie in analoger Weise das Brandschutzmodul 38 aus, sodass die Baugruppe 10 ebenfalls zur Ausbildung einer Leitungsdurchführung verwendet werden kann.

Demnach ist eine Baugruppe 10 geschaffen, die für verschiedene Rohrdurchmesser bzw. Leitungsdurchführungen eingesetzt werden kann.

## Patentansprüche

1. Verfahren zum Herstellen einer Baugruppe (10) für eine Leitungsdurchführung, mit den folgenden Schritten:
(a) eine ein Brandschutzmodul (38) bildende Brandschutzmatte (12) wird der Größe der Leitungsdurchführung entsprechend abgelängt, wobei die Brandschutzmatte (12) ein flexibles Trägerelement (24) aufweist, an dessen mindestens einem Endbereich (28) ein, insbesondere kontinuierliches, Brandschutzband (26) aus einem intumeszierenden Material befestigt ist,
(b) die Brandschutzmatte (12) wird rundgeformt, und die sich gegenüberliegenden Ränder (32, 34) der Brandschutzmatte (12) werden über ein Verbindungsmittel miteinander verbunden, sodass das Brandschutzband (26) in einem Bereich eines axialen Endes (40) der rundgeformten Brandschutzmatte (12) ist, und
(c) wenigstens ein separat von der Brandschutzmatte (12) ausgebildetes mechanisches Positionierungselement (14) wird an der Brandschutzmatte (12) befestigt, das derart eingerichtet ist, dass die Baugruppe (10) über das mechanische Positionierungselement (14) an einer Wand oder einer Schalung befestigbar ist.

2. Verfahren nach Anspruch 1, **dadurch gekennzeichnet, dass** die Brandschutzmatte (12) auf einer Rolle aufgerollt ist, von der sie zunächst abgerollt wird.

3. Verfahren nach Anspruch 1 oder 2, **dadurch gekennzeichnet, dass** die sich gegenüberliegenden Ränder (32, 34) des Brandschutzmoduls (38) über wenigstens ein separates Verbindungsmittel, insbesondere einen separaten Klebestreifen (36) miteinander verbunden werden.

4. Verfahren nach einem der vorhergehenden Ansprüche, **dadurch gekennzeichnet, dass** das wenigstens eine Positionierungselement (14) an das Brandschutzmodul (38) geklebt, gesteckt, geklipst oder am Brandschutzmodul (38) eingehakt wird, insbesondere an der zum Brandschutzband (26) entgegengesetzten Seite des Trägerelements (24).

5. Verfahren nach einem der vorhergehenden Ansprüche, **dadurch gekennzeichnet, dass** am Brandschutzband (26) ein Streifenelement (30), insbesondere aus einem Schaumstoffmaterial, zur Rauchgas- und Wasserabdichtung befestigt ist.

6. Baugruppe (10) für eine Leitungsdurchführung zum Eingießen in einem Bauteil, insbesondere hergestellt nach einem der vorhergehenden Ansprüche, mit wenigstens einem mechanischen Positionierungselement (14), das derart eingerichtet ist, dass die Baugruppe (10) über das wenigstens eine mechanische Positionierungselement (14) an einer Wand oder einer Schalung befestigbar ist, und einem im Wesentlichen zylinderförmigen Brandschutzmodul (38), das ein flexibles Trägerelement (24) aufweist, an dem ein, insbesondere kontinuierliches, Brandschutzband (26) aus einem intumeszierenden Material an einem axialen Ende (40) des Brandschutzmoduls (38) befestigt ist,
wobei das Brandschutzmodul (38) zwei sich gegenüberliegende Ränder (32, 34) aufweist, die sich in Umfangsrichtung des Brandschutzmoduls (38) gegenüberliegen und über ein Verbindungsmittel miteinander verbunden sind.

7. Baugruppe (10) nach Anspruch 6, **dadurch gekennzeichnet, dass** am Brandschutzband (26) ein Streifenelement (30) zur Rauchgas- und Wasserabdichtung befestigt ist, insbesondere aus einem Schaumstoffmaterial.

8. Baugruppe (10) nach Anspruch 6 oder 7, **dadurch gekennzeichnet, dass** die sich gegenüberliegenden Ränder (32, 34) des Brandschutzmoduls (38) aneinander anliegen.

9. Baugruppe (10) nach einem der Ansprüche 6 bis 8, **dadurch gekennzeichnet, dass** die sich gegenüberliegenden Ränder (32, 34) des Brandschutzmoduls (38) über wenigstens ein separates Verbindungsmittel, insbesondere einen separaten Klebestreifen (36) miteinander verbunden sind.

10. Baugruppe (10) nach Anspruch 9, **dadurch gekennzeichnet, dass** der wenigstens eine Klebestreifen (36) an der zum Brandschutzband (26) entgegengesetzten Seite des Trägerelements (24) befestigt ist.

11. Baugruppe (10) nach einem der Ansprüche 6 bis 10, **dadurch gekennzeichnet, dass** das wenigstens eine Positionierungselement (14) an der zum Brandschutzband (26) entgegengesetzten Seite des Trägerelements (24) befestigt ist.

12. Baugruppe (10) nach einem der Ansprüche 6 bis 11, **dadurch gekennzeichnet, dass** das flexible Trägerelement (24) eine Folie ist, die insbesondere aus einem Kunststoff oder einem Metall besteht.

13. Verfahren zur Herstellung einer Leitungsdurchführung mit einer Baugruppe (10) nach einem der Ansprüche 6 bis 12 in einem Bauteil, insbesondere einer Wand aus Beton, wobei die Baugruppe (10) über das wenigstens eine Positionierungselement (14) an der Wand oder der Schalung befestigt wird und das Brandschutzmodul (38) beim Gießen des Bauteils von dem das Bauteil bildenden Gussmaterial umschlossen wird, insbesondere von Beton.
